(19) Europäisches Patentamt / European Patent Office / Office européen des brevets

(11) **EP 4 194 073 B1**

(12) **FASCICULE DE BREVET EUROPEEN**

(45) Date de publication et mention
de la délivrance du brevet:
**23.04.2025   Bulletin 2025/17**

(21) Numéro de dépôt: **22210920.9**

(22) Date de dépôt: **01.12.2022**

(51) Classification Internationale des Brevets (IPC):
**B01D 39/20** *(2006.01)*      **B22F 10/28** *(2021.01)*
**B33Y 10/00** *(2015.01)*      **B33Y 80/00** *(2015.01)*

(52) Classification Coopérative des Brevets (CPC):
(C-Sets disponibles)
**B01D 39/2034; B22F 10/28; B22F 10/38;**
**B33Y 10/00; B33Y 80/00;** B01D 2239/0442;
B01D 2239/086; B01D 2239/10; B01D 2239/1208;
B01D 2239/1216; B22F 2999/00; Y02P 10/25
(Cont.)

(54) **FILTRE MÉTALLIQUE À ARCHITECTURE MICROSTRUCTURÉE DE POROSITÉ CONTRÔLÉE ET PROCÉDÉ DE FABRICATION D'UN TEL FILTRE**

METALLFILTER MIT MIKROSTRUKTURIERTER ARCHITEKTUR MIT KONTROLLIERTER POROSITÄT UND VERFAHREN ZUR HERSTELLUNG EINES SOLCHEN FILTERS

METAL FILTER WITH MICRO-STRUCTURED ARCHITECTURE WITH CONTROLLED POROSITY AND METHOD FOR MANUFACTURING SUCH A FILTER

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **10.12.2021   FR 2113277**

(43) Date de publication de la demande:
**14.06.2023   Bulletin 2023/24**

(73) Titulaire: **Commissariat à l'Energie Atomique et aux Energies Alternatives**
**75015 Paris (FR)**

(72) Inventeurs:
• **MASKROT, Hicham**
  **91310 Montlhéry (FR)**
• **HERCHER, Olivier**
  **91640 Fontenay-lès-Briis (FR)**
• **SCHUSTER, Frédéric**
  **78100 Saint-Germain-en-Laye (FR)**
• **MICHAU, Alexandre**
  **91440 Bures-sur-Yvette (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
WO-A1-2018/005315      US-A1- 2017 239 726
US-A1- 2020 306 674

• ALFAIFY ABDULLAH ET AL: "Originality/value", vol. 25, no. 1, 7 January 2019 (2019-01-07), GB, pages 162 - 175, XP055841686, ISSN: 1355-2546, Retrieved from the Internet <URL:https://www.emerald.com/insight/content/doi/10.1108/RPJ-11-2017-0226/full/pdf?title=controlling-the-porosity-of-316l-stainless-steel-parts-manufactured-via-the-powder-bed-fusion-process> [retrieved on 20171124], DOI: 10.1108/RPJ-11-2017-0226

(52) Classification Coopérative des Brevets (CPC):
     (Cont.)

     C-Sets
     B22F 2999/00, B22F 10/38, B22F 3/11

## Description

### Domaine technique de l'invention

L'invention se rapporte aux filtres métalliques à architecture microstructurée.

Une architecture est dite microstructurée dans la mesure où les principaux éléments formant ladite architecture présentent des dimensions micrométriques, c'est-à-dire des dimensions inférieures à 1000 $\mu$m, dans au moins deux dimensions de l'espace.

De tels filtres métalliques permettent classiquement de filtrer un fluide, liquide ou gazeux, tout en étant suffisamment perméables pour laisser circuler au moins une partie dudit fluide.

L'invention concerne également les procédés de fabrication de filtres métalliques à architecture microstructurée.

L'invention trouve son application dans les systèmes nécessitant la filtration d'un fluide. À titre d'exemple, l'invention peut être utilisée dans un système de filtration sanitaire tel un filtre sanitaire ou encore un masque sanitaire. À titre d'exemple, l'invention peut également être utilisée dans des plaques de diffusion gazeuse. L'invention peut également être utilisée dans des systèmes de dépollution de l'air ou encore des systèmes de filtration de déchets radioactifs. WO 2018/005315 A1, US 2017/239726 A1 et US 2020/306674 A1 représentent l'état de l'art pertinent.

### Arrière-plan technique

Depuis la propagation de la COVID-19, les masques sanitaires, chirurgicaux ou répondants aux normes FFP1 ou FFP2, sont devenus des produits de consommation courante pour des milliards de personnes à travers le monde. Ces masques étant intrinsèquement éphémères et non-réutilisables, ils représentent actuellement une grande source de déchets potentiellement souillés. Le lavage des masques chirurgicaux n'est pas recommandé par les autorités sanitaires en raison de la perte d'efficacité qui se produit lorsque l'humidité s'y dépose au cours de son utilisation. En outre, même si on envisageait de laver ce type de masques, cela générerait d'autres inconvénients sur le plan environnemental comme ceci ressort de l'analyse des eaux usées par exemple menée dans la ville de Paris. Celle-ci a mis en évidence la présence de traces de la COVID-19 dans ces eaux. Ainsi, le problème serait déplacé puisqu'il consisterait à gérer les conséquences environnementales du lavage de millions de masques chirurgicaux.

Une option possible pour répondre à ces problématiques consiste à utiliser des masques sanitaires ayant une plus longue durée d'utilisation.

À cet égard, on connait déjà les filtres métalliques fabriqués par frittage de poudre. Toutefois, outre la complexité des procédés de frittage, ils sont également très onéreux. En outre, les filtres métalliques ainsi obtenus ne sont réalisables que dans des formes limitées et ont une porosité hétérogène. Du fait de cette porosité hétérogène, il est plus difficile d'obtenir une faible perte de charge, i.e. une faible limitation de la vitesse avec laquelle le fluide traverse le filtre, et à la fois une filtration efficace. Si l'on considère une filtration maximale des particules de petite taille, c'est-à-dire une filtration de grade 0.1 dans laquelle plus de 99% des particules de taille supérieure 100 nm sont filtrées, alors la perte de charge est élevée. Un compromis doit donc être trouvé.

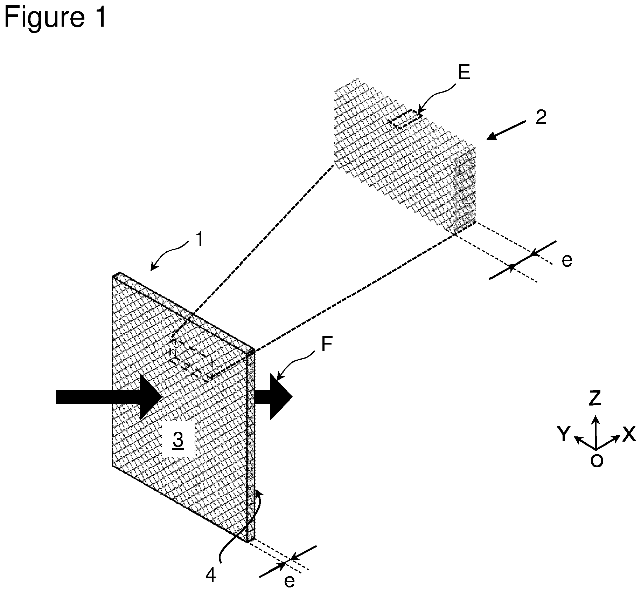

On a également proposé des filtres de porosité homogène à architecture microstructurée fabriqués par impression 3D (Figure 1). Cependant, de tels filtres ne permettent pas de répondre complètement à la problématique liée à la perte de charge lorsque l'efficacité de la filtration augmente. En effet, s'il est plus simple de trouver un compromis entre la perte de charge et l'efficacité de la filtration, la perte de charge reste néanmoins élevée.

### Résumé de l'invention

L'invention permet de surmonter les inconvénients précités et propose à cet effet un filtre métallique comprenant une architecture microstructurée définie dans un espace tridimensionnel présentant des axes orthogonaux X, Y, Z, l'architecture microstructurée comprenant :

- un réseau métallique formé d'une pluralité de brins de liaison longitudinaux, à savoir s'étendant selon une direction d'axe longitudinal (axe X), et
- un réseau de pores formé d'une pluralité d'interstices longitudinaux localisés le long de brins de liaison longitudinaux, chaque interstice longitudinal correspondant à un sous-ensemble de pores dudit réseau de pores, sous-ensemble de pores pour lequel les pores sont alignés le long de l'axe longitudinal X,

les interstices longitudinaux définissant ainsi un axe d'anisotropie de l'architecture microstructurée.

Ainsi, en pratique, au sein du réseau de pores, les pores sont distribués de sorte qu'une anisotropie de l'architecture microstructurée soit obtenue dans la direction d'axe longitudinal X, au regard des deux autres directions Y, Z.

Les pores d'un interstice donné sont généralement parallèles aux pores d'un autre interstice et ainsi de suite pour l'ensemble des interstices. Les interstices du réseau de pores sont donc généralement parallèles les uns aux autres. La porosité est donc contrôlée au sein de l'architecture microstructurée. Le filtre métallique selon l'invention permet ainsi d'avoir une faible perte de charge tout en ayant une efficacité de filtration élevée.

Selon différentes caractéristiques de l'invention qui pourront être prises ensemble ou séparément :

- les pores présentent la même taille ;

- la porosité est comprise entre 10% et 70% ;

- les brins de liaison présentent une largeur comprise entre 10 μm et 500 μm, et les interstices longitudinaux présentent une largeur comprise entre 1 μm et 100 μm ;

- le filtre métallique présente une épaisseur définie selon l'axe longitudinal comprise entre 250 μm et 300 mm ;

- le réseau métallique est fait d'un métal choisi parmi l'aluminium, le nickel, le cobalt, le fer, le cuivre, le palladium, le titane, le tungstène, l'argent ou le platine, ou d'un alliage de matériaux comme de l'acier inoxydable, un alliage métallique ou un oxyde métallique ;

- le filtre métallique comprend en outre deux faces principales opposées délimitant l'architecture microstructurée, lesdites faces longitudinales étant respectivement recouvertes d'une couche mince virucide ou bactéricide.

L'invention concerne aussi une pièce fonctionnelle comprenant un filtre métallique selon l'invention et une bordure périphérique de porosité nulle entourant l'architecture microstructurée du filtre métallique.

L'invention concerne en outre un procédé de fabrication additive d'un filtre métallique tel que décrit précédemment, ledit procédé de fabrication additive comprenant les étapes suivantes :

- déposer une couche de poudre métallique d'un matériau donné ou d'un alliage de matériaux sur un support, ladite couche de poudre métallique présentant une épaisseur comprise entre 1 μm et 200 μm ;

- effectuer une fusion localisée par laser des grains métalliques de la poudre, à une température supérieure à la température de fusion du matériau ou de l'alliage de matériaux formant ladite poudre métallique déposée lors de l'étape de dépôt de la couche de poudre métallique et exécuter un programme d'ordinateur de sorte à créer un motif prédéterminé d'une l'architecture microstructurée définie dans un espace tridimensionnel présentant des axes orthogonaux X, Y, Z, l'architecture microstructurée comprenant :

  - un réseau métallique formé d'une pluralité de brins de liaison longitudinaux, à savoir s'étendant selon une direction d'axe longitudinal X, et
  - un réseau de pores formé d'une pluralité d'interstices longitudinaux localisés le long de brins de liaison longitudinaux, chaque interstice longitudinal correspondant à un sous-ensemble de pores dudit réseau de pores, sous-ensemble de pores pour lequel les pores sont alignés le long de l'axe longitudinal X,

les interstices longitudinaux définissant ainsi un axe d'anisotropie de l'architecture microstructurée.

Le procédé selon l'invention pourra comprendre l'une au moins des étapes suivantes, prise seule ou en combinaison :

- le support est chauffé à une température strictement supérieure à la température ambiante et inférieure ou égale à 250°C ;

- le support est chauffé à une température comprise entre 180°C et 220°C, avantageusement entre 190°C et 210°C ;

- une densité d'énergie volumique du faisceau laser durant l'étape de fusion localisée par laser correspond de 30% à 90% de la valeur de la densité d'énergie volumique du faisceau laser nécessaire à former un bloc non poreux à partir de ladite poudre métallique ;

- on réitère successivement l'étape de dépôt et l'étape de fusion localisée.

**Brève description des figures**

D'autres objets et caractéristiques de l'invention apparaîtront plus clairement dans la description qui suit, faite en référence aux figures annexées, dans lesquelles :

La figure 1 est une vue schématique en perspective d'ensemble d'un filtre métallique selon un exemple de réalisation de la présente invention ;

La figure 2 est une vue schématique en coupe d'un filtre métallique selon un plan de vecteurs directeurs $\vec{X}$ et $\vec{Y}$ illustrant l'architecture microstructurée d'un filtre métallique selon un mode de réalisation de la présente invention ;

La figure 3 est une vue schématique en coupe d'un filtre métallique selon un plan de vecteurs directeurs $\vec{Y}$ et $\vec{Z}$ illustrant l'architecture microstructurée d'un filtre métallique selon un mode de réalisation de la présente invention ;

La figure 4 est une image d'une architecture microstructurée selon l'art antérieur ;

La figure 5 est une image d'une architecture microstructurée selon l'invention.

**Description détaillée de l'invention**

En référence à la figure 1, l'invention concerne un filtre métallique 1 comprenant une architecture microstructurée définie dans un espace tridimensionnel présentant des axes orthogonaux X, Y et Z.

Le filtre métallique 1 permet la filtration d'un fluide F liquide ou gazeux. Par exemple, si le filtre métallique est destiné à être utilisé comme masque sanitaire, le fluide est l'air expiré et inspiré par un individu. Cet air peut donc être chargé en gouttelettes. Le filtre métallique 1 peut présenter toute forme ; il peut ainsi être parallélépipédique tel qu'illustré sur la figure 1 mais également prismatique ou encore polyédrique. La forme sera adaptée selon le besoin.

Quelle que soit la forme géométrique choisie, on considérera dans la suite de la présente description que le fluide F se déplace dans le sens de l'épaisseur e du filtre métallique 1. L'épaisseur e du filtre métallique correspond à la dimension la plus faible dudit filtre métallique. En l'espèce, il s'agit donc de la distance comprise entre une première face principale 3 et une deuxième face principale 4 du filtre métallique 1. Dans l'exemple de réalisation illustré sur la figure 1, l'épaisseur e est donc définie dans une direction d'axe longitudinal, cet axe (axe X) étant orthogonal aux faces principales 3,4. Ainsi, lorsque le fluide F se déplace dans le sens de l'épaisseur e du filtre métallique 1, cela signifie qu'il traverse en premier lieu la première face principale 3 du filtre métallique, puis pénètre dans le filtre métallique 1 et enfin traverse la deuxième face principale 4 dudit filtre métallique dans cet ordre. Il convient de noter que cela ne définit ni la trajectoire réelle ni la dynamique de déplacement du fluide F à l'extérieur ou à l'intérieur du filtre métallique 1, mais seulement le mouvement global.

Le filtre métallique 1 comprend une architecture 2 microstructurée. L'architecture 2 est dite microstructurée dans la mesure où les principaux éléments formant ladite architecture présentent des dimensions micrométriques, c'est-à-dire des dimensions inférieures à 1000 μm, dans au moins deux dimensions de l'espace. Les principaux éléments de l'architecture microstructurée sont décrits dans la suite. Avant toute chose, précisons que l'architecture 2 microstructurée s'étend de la première face principale 3 à la deuxième face principale 4. On peut également souligner que le filtre métallique peut intégrer une pièce fonctionnelle comprenant une bordure périphérique 32 entourant l'architecture 2 microstructurée. Autrement dit, la pièce fonctionnelle comprend le filtre métallique 1 entourée de la bordure périphérique La bordure périphérique 32 présente une porosité nulle (autrement dit, égale à 0), c'est-à-dire qu'elle est non poreuse. Cela permet de renforcer la tenue mécanique du filtre métallique 1 dans son ensemble et de faciliter son intégration dans un procédé de fabrication de la pièce fonctionnelle.

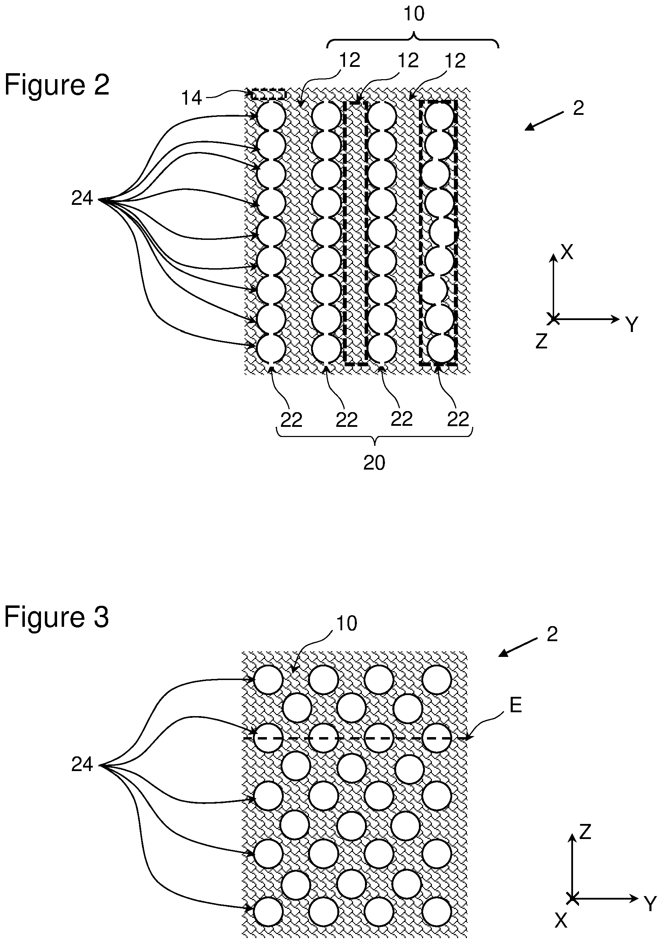

En référence à la figure 2, l'architecture 2 microstructurée comprend un réseau métallique 10 formé d'une pluralité de brins 12 de liaison s'étendant selon une direction d'axe longitudinal (axe X). Le plan de coupe de l'architecture 2 microstructurée illustré à la figure 2 est orthogonal aux faces principales 3,4 du filtre métallique 1. Ce plan est un sous-espace de l'espace X, Y, Z, précédemment introduit, de vecteurs directeurs $\vec{X}$ et $\vec{Y}$. Il correspond, par exemple, à la surface E en perspective qui est délimitée par des lignes en traits pointillés sur la figure 1. Le plan de coupe de la figure 2 est également illustré par un trait E en pointillés sur la figure 3 (il est normal à la page). Chaque brin 12 de liaison se présente comme une structure de forme allongée ayant l'aspect d'un filament dont les contours ne sont pas linéaires. Comme cela sera vu plus en détail dans la suite, les brins 12 de liaison sont formés par une fusion localisée par laser des grains d'une poudre métallique. Les brins 12 de liaison sont de dimensions micrométriques dans au moins deux directions de l'espace ce qui implique, en pratique, qu'ils présentent sensiblement la forme d'un disque de diamètre micrométrique dans un plan de coupe transverse à leur longueur.

Le réseau métallique 12 peut avantageusement comprendre des ponts de matière 14 assurant la cohésion des brins 12 métalliques. Les ponts de matière 14 permettent au réseau métallique 10 de former un ensemble solidaire.

L'architecture 2 microstructurée comprend également un réseau 20 de pores 24 délimitant les brins 12 de liaison. Les pores 24 ont le sens usuel qui leur est donné dans l'état de la technique et correspondent aux espaces vides laissés au sein d'un matériau poreux. On rappelle que la figure 2 est une illustration schématique de l'architecture 2 microstructurée. Ainsi, contrairement à ce qui est illustré, les pores 24 peuvent présenter des formes différenciées les uns par rapport aux autres même si, comme cela sera expliqué dans la suite, leur distribution et leur taille sont contrôlées. En effet, les pores 24 résultent également de la fusion localisée des grains de la poudre métallique, à ceci près qu'ils en sont la conséquence indirecte.

Le réseau 20 de pores 24 comprend une pluralité d'interstices 22 longitudinaux (axe X) correspondant à des sous-ensembles de pores 24. Plus précisément, il s'agit de sous-ensembles de pores 24 localisés le long de brins 12 de liaison. Incidemment, chaque interstice 22 longitudinal correspond à un sous-ensemble de pores 24 situés entre des brins 12 de liaison situés côte à côte sans pour autant être directement en contact les uns avec les autres. Si chaque pore 24, pris isolément, présente des dimensions micrométriques, les interstices 22 longitudinaux ont une dimension significativement plus importante que les autres dimensions ce qui leur confère une forme allongée.

Selon l'invention, les interstices 22 longitudinaux sont tous orientés selon la même direction X, ce qui n'est pas le cas dans les autres directions Y, Z d'où une anisotropie de l'architecture microstructurée. Incidemment, les interstices 22 longitudinaux sont parallèles les uns par rapport aux autres selon cette direction longitudinale. Cette anisotropie est illustrée schématiquement sur la figure 2 qui montre la distribution des pores dans le plan de vecteurs directeurs $\vec{X}$ et $\vec{Y}$. L'axe longitudinal X pourra être appelé axe d'anisotropie dans la suite de la présente description.

Bien-entendu, la direction de chaque interstice 22 longitudinal, considéré isolément, correspond à la droite parallèle à l'axe longitudinal passant par les centres des pores 24 formant cet interstice 22 longitudinal. La direction d'un interstice 22 longitudinal dépend donc nécessairement de l'agencement du sous-ensemble de pores 24 le formant. Il convient néanmoins de préciser que les pores 24 d'un interstice 22 longitudinal ne respectent pas nécessairement toujours un alignement parfait. Ceci est par exemple illustré pour l'interstice 22 longitudinal encadré en pointillé à droite sur la figure 2. La direction de l'interstice 22 longitudinal correspond donc à la droite de direction définie par l'axe longitudinal X passant par un point médian (x ; y) dont l'ordonnée y est la médiane des ordonnées des centres des pores 24.

Cette anisotropie permet d'obtenir une architecture 2 microstructurée ayant de ce fait une porosité contrôlée, la porosité étant contrôlée par une distribution contrôlée des pores 24 en interstices 22 longitudinaux comme définie ci-dessus. Lorsque le fluide F traverse le filtre métallique 1, il est contraint par la microstructuration de l'architecture 2 microstructurée tout en ayant une circulation facilitée par la présence des interstices 22 longitudinaux. L'invention permet donc d'obtenir une efficacité de filtration élevée tout en ayant une faible perte de charge. La circulation du fluide F au sein de l'architecture microstructurée est ainsi améliorée.

Avantageusement, les pores 24 du réseau 20 de pores présentent sensiblement la même taille. Ainsi, en plus de la distribution des pores 24, la porosité de l'architecture 2 microstructurée peut également être contrôlée grâce à une taille homogène des pores. On comprendra aisément que, dans la mesure où les interstices 22 longitudinaux définissent une anisotropie de l'architecture microstructurée selon la direction d'axe longitudinal (axe X) et lorsque que les pores 24 présentent tous la même taille dans l'architecture 2 microstructurée, il est possible de contrôler très précisément l'efficacité de filtration et à la fois la perte de charge, selon l'application envisagée, en variant uniquement la taille des pores 24. On rappelle néanmoins que les pores 24 sont de taille micrométrique.

La figure 3 illustre l'architecture 2 microstructurée selon un plan parallèle aux faces principales 3, 4 du filtre métallique 1. Ce plan est un sous-espace de l'espace X, Y, Z, précédemment introduit, de vecteurs directeurs $\vec{Y}$ et $\vec{Z}$. Comme cela apparaît mieux sur cette figure, chaque interstice 22, dont on ne voit à chaque fois qu'un pore 24 sur la figure 3, est généralement entouré par quatre brins 12 de liaison, deux à deux situés côte à côte. Il en est de même pour chaque brin 12 de liaison qui est généralement entouré par quatre interstices 22 longitudinaux selon l'exemple de réalisation considéré. Toutefois, la distribution des pores 24 telle qu'illustrée sur la figure 3 ne revêt pas un caractère obligatoire et d'autres distributions peuvent être envisagées sous réserve de ce qui suit.

Au sein du réseau de pores, les pores 24 sont distribués de sorte qu'une anisotropie soit obtenue dans la direction d'axe longitudinal X, au regard des deux autres directions Y, Z. La distribution des pores 24 favorise le déplacement du fluide F à travers les interstices 22 longitudinaux qui sont donc configurés pour faciliter le déplacement du fluide F au regard des autres directions.

Préférentiellement, la porosité (ou taux de porosité) de l'architecture 2 microstructurée est comprise entre 10% et 70%. Cela permet d'obtenir une perméabilité comprise entre 11 et 200 l.m$^{-2}$.s$^{-1}$ pour une perte de charges entre les faces principales 3, 4 de 100 Pascals environ. La gamme de porosité précitée est particulièrement adaptée pour des masques de filtration sanitaire tels que ceux décrits dans le préambule de la présente description. Cela étant dit, plus la porosité sera élevée plus la perte de charge sera faible et, inversement. D'autres applications peuvent être envisagées dans le cadre de la présente invention.

De préférence, les brins 12 de liaison présentent une largeur comprise entre 10 $\mu$m et 500 $\mu$m tandis que les interstices 22 longitudinaux présentent une largeur comprise entre 1 $\mu$m et 100 $\mu$m. Sur les schémas annexés, la largeur est prise selon l'axe Y, orthogonal à l'axe longitudinal. Il ne s'agit pas ici de la plus grande dimension des brins 12 de liaison et des interstices 22 longitudinaux. De tels paramètres permettent d'obtenir une microstructuration de l'architecture 2 appropriée pour le type de filtration souhaité.

De manière particulièrement avantageuse, l'épaisseur e du filtre métallique 1, c'est-à-dire la plus petite dimension du filtre métallique 1 s'étend selon l'axe X d'anisotropie. Lorsque le filtre métallique 1 présente cette configuration, le fluide F se déplace selon une direction préférentielle qui qui est aussi la plus petite des dimensions du filtre métallique. Il y a donc moins de frottements au sein de l'architecture 2 microstructurée, ce qui a pour conséquence que la dynamique de déplacement du fluide F au sein de la microstructure est principalement guidée par la distribution anisotropique des interstices 22 longitudinaux et la taille des pores 24. La perte de charge que subit le fluide F en traversant le filtre métallique 1 et l'efficacité de filtration sont encore mieux maîtrisés.

L'épaisseur e du filtre métallique 1 est préférentiellement comprise entre 250 $\mu$m et 300 mm. En pratique, elle dépendra essentiellement de l'application considérée. Pour un masque de filtration sanitaire, on optera pour une épaisseur comprise entre 400 $\mu$m et 2 mm par exemple. Si le filtre métallique 1 selon l'invention est utilisé dans la fabrication de pièces fonctionnelles telles que des filtres à air à haute efficacité de traitement généralement utilisés dans un dispositif de traitement de l'air ou un dispositif de dépollution, son épaisseur pourra être bien plus importante.

Le réseau métallique 10 est fait d'un métal sous forme pure, ou sous forme d'un alliage de métaux ou d'oxydes métalliques, le(s) métal(aux) étant choisi(s) parmi l'aluminium, l'acier inoxydable, le nickel, le cobalt, le fer, le cuivre, le palladium, le titane, le tungstène, l'argent, le platine. Ces métaux sont non seulement sous forme solides à température ambiante, mais ils sont par ailleurs de bons candidats pour une microstructuration par fusion au laser. En outre, ils présentent de bonnes propriétés mécaniques et sont adaptés pour recevoir un dépôt de couches minces.

À ce propos, le filtre métallique 1 peut en outre comprendre une couche mince virucide ou bactéricide recouvrant les faces principales 3, 4 du filtre métallique 1. En fonction de la technique de dépôt envisagée, cette couche mince peut s'étendre sur une certaine profondeur de pores à partir des faces principales 3, 4. Cette couche mince virucide ou bactéricide est une couche barrière pour des micro-organismes infectieux tels que des bactéries et des virus. À titre d'exemple, une telle couche mince peut être faite d'un métal pur, d'un alliage de métaux ou d'oxydes métalliques tels que le titane, le cuivre, le zinc, le nickel ou l'argent.

On pourra ajouter d'autres fonctionnalités pratiques au filtre métallique 1 pour en renforcer les propriétés par l'intermédiaire de cette couche mince ou d'une couche mince supplémentaire. Par exemple, la couche mince peut permettre de rendre l'architecture 2 microstructurée hydrophile sur l'une des faces principales 3, 4 tandis qu'elle sera hydrophobe sur l'autre des faces principales 3, 4. Ceci peut notamment permettre de contrôler l'humidité d'une pièce fonctionnelle équipée d'un tel filtre métallique

L'invention concerne également un procédé de fabrication additive d'un filtre métallique 1 tel que précédemment décrit.

Une première étape 110 du procédé de fabrication additive selon l'invention consiste à déposer au moins une couche de poudre métallique d'un matériau donné, ou d'un alliage de matériaux, sur un support. Chaque couche de poudre métallique présente une épaisseur qui pourra être comprise entre 1 $\mu$m et 200 $\mu$m. Avantageusement, chaque couche de poudre présente une épaisseur comprise entre 1 $\mu$m et 150 $\mu$m, entre 1 $\mu$m et 120 $\mu$m ou encore plus précisément entre 10 $\mu$m et 120 $\mu$m. Typiquement, on peut utiliser une couche d'épaisseur d'environ 30 $\mu$m, 50 $\mu$m ou 100 $\mu$m.

Le support peut être chauffé à une température strictement supérieure à la température ambiante et inférieure ou égale à 250°C. Avantageusement, le support peut plus précisément être chauffé à une température comprise entre 180°C et 220°C, et encore plus avantageusement entre 190°C et 210°C. Cela permet d'augmenter l'adhérence au support et de stabiliser structurellement la couche ainsi formée. Le produit fini est donc moins fragile.

Une deuxième étape du procédé de fabrication additive selon l'invention consiste à effectuer une fusion localisée par laser des grains métalliques de la poudre, à une température supérieure à la température de fusion du matériau donné, ou de l'alliage de matériaux donné, formant ladite poudre métallique déposée lors de l'étape 110. La fusion par laser effectuée dans ces conditions permet un apport d'énergie localisé sous l'action d'un faisceau laser ce qui permet de faire fondre de manière localisée les grains de la poudre.

Cette fusion localisée, et donc sélective, est exécutée au moyen d'un programme d'ordinateur qui permet de créer un motif M prédéterminé de l'architecture 2 microstructurée à partir d'une base de données informatique préétablie.

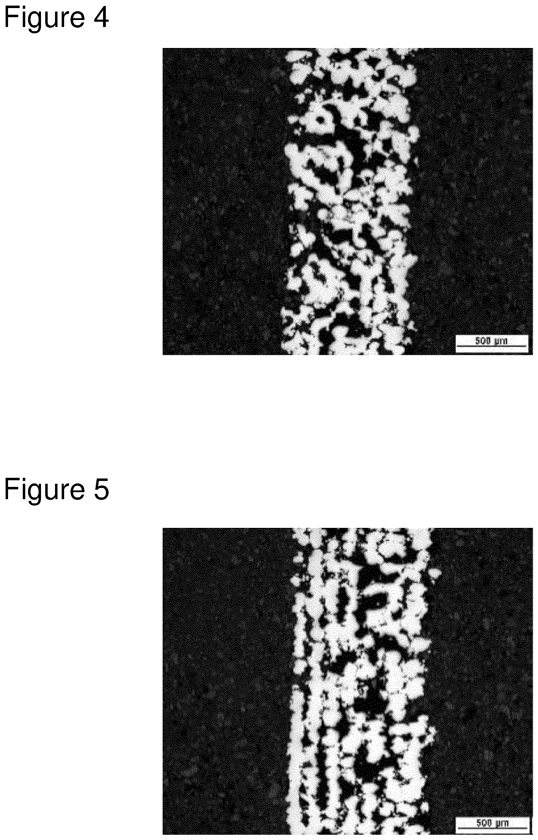

La figure 5 est une image d'une architecture 2 microstructurée selon l'invention. On distingue l'anisotropie des interstices 22 longitudinaux qui sont tous parallèles les uns aux autres selon une direction donnée. Au contraire, dans une architecture microstructurée obtenue par un procédé selon l'art antérieur tel qu'illustrée sur la figure 4, les pores sont répartis selon une distribution isotrope.

Il peut être nécessaire de réitérer les étapes 110 et 120 plusieurs fois pour former des brins 12 de liaison aux dimensions adaptées.

À chaque étape de fusion par laser, la trajectoire adoptée par le faisceau laser comprend des vecteurs de déplacement où les vecteurs de déplacement sont décalés spatialement deux à deux suivant une valeur de décalage et le taux de porosité des pores au sein du filtre métallique 1 est ajusté, pour une puissance de faisceau laser donnée et une épaisseur de couche donnée, en adaptant ladite valeur de décalage, le taux de porosité augmentant au fur et à mesure que la valeur de décalage augmente. La valeur de décalage HD, cette valeur ayant une incidence sur le filtre métallique 1 fabriqué.

A cet égard, la densité d'énergie volumique du faisceau laser à chaque passe durant l'étape de fusion par laser, au niveau de l'architecture 2 microstructurée, est comprise entre 30% et 90% d'une valeur de densité d'énergie volumique du faisceau laser nécessaire à l'obtention d'un bloc non poreux à partir de ladite poudre métallique. Pour adapter cette densité d'énergie volumique, on peut par exemple fixer une puissance laser en agissant sur les autres paramètres : HD, V et $e_C$. On pourra se référer à la formule mathématique (F1) ci-après qui définit ces paramètres.

Le programme d'ordinateur, à l'aide de la base de données, pilote le déplacement du faisceau laser par rapport à la poudre métallique déposée au cours de l'étape 110, selon au moins l'un des paramètres choisis parmi:

- une trajectoire relative entre le faisceau laser et la poudre de matériau métallique précédemment déposée,
- une vitesse de déplacement « V » correspondant à une vitesse relative entre le faisceau laser et la poudre de matériau métallique précédemment déposée,

- une puissance du faisceau laser « P »,
- une densité d'énergie volumique du faisceau laser « E ».

La densité d'énergie volumique E du faisceau laser, exprimée en J/mm$^3$, se définit par la formule mathématique (F1) suivante :

$$E = \frac{P}{V.HD.e_C} \quad (F1)$$

Où : P est la puissance de faisceau laser, exprimée en Watt (W), V est la vitesse de déplacement du faisceau laser, exprimée en mm/s, HD est une valeur de décalage entre deux vecteurs adjacents d'application du faisceau laser, exprimé en mm, et $e_C$ est l'épaisseur de couche, exprimée en mm, E est la densité d'énergie volumique du faisceau laser.

Cette solution de fabrication additive en trois dimensions par dépôts de couches successives puis fusion par laser selon des trajectoires préétablies et pilotées informatiquement, est connue sous la technologie nommée « SLM » qui est l'acronyme de « Selective Laser Melting » selon la terminologie anglo-saxonne, qui peut donc se traduire, comme on l'aura compris par « fusion localisée par laser ».

Dans une méthode additive SLM, les opérations sont réalisées dans un environnement sous gaz neutre (généralement de l'argon), où notamment une fine couche de poudre métallique est étalée sur un substrat métallique. Le faisceau laser vient alors apporter à la poudre l'énergie nécessaire à la faire fondre et adhérer aux couches inférieures de façon sélective en fonction de la géométrie de la pièce. La répétition de ces actions permet la fabrication de pièces métalliques de géométrie complexe en trois dimensions. Pour ce faire, il est nécessaire de préparer le fichier de type « commande assistée par ordinateur » de la pièce en la découpant en tranches de l'épaisseur de la couche de fabrication souhaitée pour en faire un ensemble de plans en deux dimensions. Il faut en plus lui créer des supports de maintien et lui affecter un jeu de paramètre qui permettra de définir les trajectoires du faisceau laser sur la poudre. L'ensemble de ces opérations permet d'obtenir un fichier qui est transmis et pilote la machine de fabrication.

D'autres méthodes de fabrication additive de matériaux pourraient être envisagées, comme par exemple la technologie nommée « SLS » qui est l'acronyme de « Selective Laser Sintering » selon la terminologie anglo-saxonne qui peut se traduire par « frittage localisé par laser ». Il existe d'autres techniques.

Enfin, il est possible de prévoir, dans le cadre de l'invention, une étape de dépôt d'une couche mince interposée entre une étape 120 de fusion par laser et l'étape 110 de dépôt d'une couche de poudre métallique si une fonctionnalité le requiert. D'autres modifications du procédé peuvent être prévues afin de fonctionnaliser les couches successives ainsi formées.

## Mise en œuvre pratique du procédé selon l'invention

Selon un exemple de mise en œuvre particulière, le procédé comprend les étapes suivantes :

- lors de l'étape 110 on dépose une poudre métallique d'épaisseur égale à 50 μm sur le support ;

- l'étape 120 est mise en œuvre avec un faisceau laser de puissance égale à 275 W, une valeur de décalage HD fixée à 0,1 mm ou 0,12 mm et un seuil inférieur de vitesse de déplacement du faisceau laser étant (par rapport au lite de poudre) compris entre 1500 et 6000 mm/s.

Dans le cadre de cet exemple de mise en œuvre, il a pu être mis en évidence une augmentation du taux de porosité au sein de l'architecture microstructurée, au-dessus d'un seuil inférieur de vitesse de déplacement, au fur et à mesure que la vitesse de déplacement augmentait.

Il a donc également pu être mis en évidence que le taux de porosité des pores au sein de l'architecture 2 microstructurée peut être ajusté, en adaptant la densité d'énergie volumique du faisceau laser. En effet, le taux de porosité augmente, au-dessous d'un seuil supérieur de densité d'énergie volumique, au fur et à mesure que la densité d'énergie volumique décroit.

À cet égard, selon un exemple de mise en œuvre particulière, le procédé comprend les étapes suivantes :

- lors de l'étape 110 on dépose une poudre métallique d'épaisseur égale à 50 μm sur le support ;

- l'étape 120 est mise en œuvre avec un faisceau laser de puissance égale à 275 W, un seuil supérieur de la densité volumique d'énergie du faisceau laser peut varier entre 7 J/mm$^3$ et 80 J/mm$^3$ et plus spécifiquement dans cet exemple entre 7 J/mm$^3$ et 30 J/mm$^3$ (notamment en fonction de la valeur de décalage HD : 0,1 mm ou 0,12 mm).

Des essais ont été réalisés en utilisant une poudre d'acier inoxydable 316L commercialisée par SLM Solutions®. Il s'agit des résultats montrés sur les figures 4 et 5. Le matériau métallique peut tout autant être en particulier de l'aluminium ou un alliage d'aluminium, qui présentent l'avantage d'être légers et thermiquement stables aux températures de désinfection.

**Revendications**

1. Filtre métallique (1) comprenant une architecture (2) microstructurée définie dans un espace tridimensionnel présentant des axes orthogonaux (X, Y, Z), l'architecture (2) microstructurée comprenant un réseau (10) métallique formé d'une pluralité de brins (12) de liaison longitudinaux, à savoir s'étendant selon une direction d'axe longitudinal (X), le filtre métallique (1) étant **caractérisé en ce que** :

   - l'architecture microstructurée (2) comprend un réseau (20) de pores formé d'une pluralité d'interstices (22) longitudinaux localisés le long de brins (12) de liaison longitudinaux, chaque interstice (22) longitudinal correspondant à un sous-ensemble de pores (24) dudit réseau (20) de pores, sous-ensemble de pores (24) pour lequel les pores sont alignés le long de l'axe longitudinal (X),

   les interstices (22) longitudinaux définissant ainsi un axe d'anisotropie de l'architecture microstructurée.

2. Filtre métallique selon la revendication 1, dans lequel les pores (24) présentent la même taille.

3. Filtre métallique selon l'une quelconque des revendications 1 ou 2, dans lequel la porosité est comprise entre 10% et 70%.

4. Filtre métallique (1) selon l'une quelconque des revendications 1 à 3, dans lequel les brins (12) de liaison présentent une largeur comprise entre 10 $\mu$m et 500 $\mu$m, et les interstices (22) longitudinaux présentent une largeur comprise entre 1 $\mu$m et 100 $\mu$m.

5. Filtre métallique (1) selon l'une quelconque des revendications 1 à 4, présentant une épaisseur (e) définie selon l'axe longitudinal (X) comprise entre 250 $\mu$m et 300 mm.

6. Filtre métallique (1) selon l'une quelconque des revendications 1 à 5, dans lequel le réseau métallique (10) est fait d'un métal choisi parmi l'aluminium, le nickel, le cobalt, le fer, le cuivre, le palladium, le titane, le tungstène, l'argent ou le platine, ou d'un alliage de matériaux comme de l'acier inoxydable, un alliage métallique ou un oxyde métallique.

7. Filtre métallique (1) selon l'une quelconque des revendications 1 à 6, comprenant en outre deux faces principales opposées (3, 4) délimitant l'architecture (2) microstructurée, lesdites faces longitudinales (3, 4) étant respectivement recouvertes d'une couche mince virucide ou bactéricide.

8. Pièce fonctionnelle (30) comprenant un filtre métallique (1) selon l'une quelconque des revendications 1 à 7 et une bordure périphérique (32) de porosité nulle entourant l'architecture (2) microstructurée du filtre métallique.

9. Procédé (100) de fabrication additive d'un filtre métallique (1) selon l'une quelconque des revendications 1 à 7, ledit procédé (100) de fabrication additive comprenant les étapes suivantes :

   (110) déposer au moins une couche de poudre métallique d'un matériau donné ou d'un alliage de matériaux donné sur un support, ladite couche de poudre métallique présentant une épaisseur comprise entre 1 $\mu$m et 200 $\mu$m ;
   (120) effectuer une fusion localisée par laser des grains métalliques de la poudre, à une température supérieure à la température de fusion du matériau donné ou de l'alliage de matériaux donné formant ladite poudre métallique déposée lors de l'étape (110), le procédé étant **caractérisé en ce que** l'on exécute un programme d'ordinateur de sorte à créer un motif (M) prédéterminé d'une l'architecture (2) microstructurée définie dans un espace tridimensionnel présentant des axes orthogonaux (X, Y, Z), l'architecture (2) microstructurée comprenant :

   - un réseau (10) métallique formé d'une pluralité de brins (12) de liaison longitudinaux, à savoir s'étendant selon une direction d'axe longitudinal (X), et
   - un réseau (20) de pores formé d'une pluralité d'interstices (22) longitudinaux localisés le long de brins (12) de liaison longitudinaux, chaque interstice (22) longitudinal correspondant à un sous-ensemble de pores (24) dudit réseau (20) de pores, sous-ensemble de pores (24) pour lequel les pores sont alignés le long de l'axe longitudinal (X),

   les interstices (22) longitudinaux définissant ainsi un axe d'anisotropie de l'architecture microstructurée.

10. Procédé (100) selon la revendication 9, dans lequel le support est chauffé à une température strictement supérieure à la température ambiante et inférieure ou égale à 250°C.

11. Procédé (100) selon l'une quelconque des revendications 9 ou 10, dans lequel le support (S) est chauffé à une température comprise entre 180°C et 220°C, avantageusement entre 190°C et 210°C.

12. Procédé (100) selon l'une quelconque des revendications 9 à 11, dans lequel une densité d'énergie volumique du faisceau laser durant l'étape (120) de fusion localisée par laser correspond de 30% à 90% de la valeur de la densité d'énergie volumique du faisceau laser nécessaire à former un bloc non poreux à partir de ladite poudre métallique.

13. Procédé selon l'une quelconque des revendications 9 à 12, dans lequel on réitère successivement l'étape (110) de dépôt et l'étape (120) de fusion localisée.

**Patentansprüche**

1. Metallfilter (1), umfassend eine mikrostrukturierte Architektur (2), die in einem dreidimensionalen Raum definiert ist, der orthogonale Achsen (X, Y, Z) aufweist, wobei die mikrostrukturierte Architektur (2) ein aus einer Vielzahl von längsgerichteten Verbindungssträngen (12) gebildetes Metallnetzwerk (10), und zwar sich gemäß einer Richtung einer Längsachse (X) erstreckend, umfasst, wobei der Metallfilter (1) **dadurch gekennzeichnet ist, dass**:

   - die mikrostrukturierte Architektur (2) ein Netzwerk (20) aus Poren umfasst, das aus einer Vielzahl von längsgerichteten Zwischenräumen (22) gebildet ist, die entlang längsgerichteten Verbindungssträngen (12) lokalisiert sind, wobei jeder längsgerichtete Zwischenraum (22) einer Teilanordnung von Poren (24) des Netzwerks (20) von Poren, der Teilanordnung von Poren (24), für die die Poren entlang der Längsachse (X) ausgerichtet sind, entspricht,

   wobei die längsgerichteten Zwischenräume (22) somit eine Anisotropieachse der mikrostrukturierten Architektur definieren.

2. Metallfilter nach Anspruch 1, wobei die Poren (24) die gleiche Größe aufweisen.

3. Metallfilter nach einem der Ansprüche 1 oder 2, wobei die Porosität zwischen 10 % und 70 % liegt.

4. Metallfilter (1) nach einem der Ansprüche 1 bis 3, wobei die Verbindungsstränge (12) eine Breite zwischen 10 µm und 500 µm aufweisen und die längsgerichteten Zwischenräume (22) eine Breite zwischen 1 µm und 100 µm aufweisen.

5. Metallfilter (1) nach einem der Ansprüche 1 bis 4, der eine gemäß der Längsachse (X) definierte Dicke zwischen 250 µm und 300 mm aufweist.

6. Metallfilter (1) nach einem der Ansprüche 1 bis 5, wobei das Metallnetzwerk (10) aus einem Metall, ausgewählt aus Aluminium, Nickel, Kobalt, Eisen, Kupfer, Palladium, Titan, Wolfram, Silber oder Platin, oder aus einer Legierung von Materialien wie Edelstahl, einer Metalllegierung oder einem Metalloxid hergestellt ist.

7. Metallfilter (1) nach einem der Ansprüche 1 bis 6, weiter umfassend zwei gegenüberliegende Hauptflächen (3, 4), die die mikrostrukturierte Architektur (2) abgrenzen, wobei die längsgerichteten Flächen (3, 4) jeweils mit einer dünnen viruziden oder bakteriziden Schicht beschichtet sind.

8. Funktionelles Werkstück (30), umfassend einen Metallfilter (1) nach einem der Ansprüche 1 bis 7 und einen umlaufenden Rand (32) mit einer Porosität von null, der die mikrostrukturierte Architektur (2) des Metallfilters umgibt.

9. Verfahren (100) zur additiven Fertigung eines Metallfilters (1) nach einem der Ansprüche 1 bis 7, wobei das Verfahren (100) zur additiven Fertigung die folgenden Schritte umfasst:

   (110) Abscheiden mindestens einer Metallpulverschicht eines gegebenen Materials oder einer gegebenen Materiallegierung auf einen Träger, wobei die Metallpulverschicht eine Dicke zwischen 1 µm und 200 µm aufweist;
   (120) Bewirken eines lokalisierten Schmelzens der Metallkörner des Pulvers durch einen Laser bei einer Temperatur über der Schmelztemperatur des gegebenen Materials oder der gegebenen Materiallegierung, die das in Schritt (110) abgeschiedene Metallpulver bildet, wobei das Verfahren **dadurch gekennzeichnet ist, dass** ein Computerprogramm derart ausgeführt wird, um ein vorbestimmtes Motiv (M) einer mikrostrukturierten Architektur (2) zu erzeugen, die in einem dreidimensionalen Raum definiert ist, der orthogonale Achsen (X, Y, Z) aufweist, wobei die mikrostrukturierte Architektur (2) umfasst:

   - ein Metallnetzwerk (10), das aus einer Vielzahl von längsgerichteten Verbindungssträngen (12) gebildet ist, und zwar sich gemäß einer Richtung einer Längsachse (X) erstreckend, und
   - ein Netzwerk (20) aus Poren, das aus einer Vielzahl von längsgerichteten Zwischenräumen (22) gebildet ist, die entlang der längsgerichteten Verbindungsstränge (12) lokalisiert sind, wobei jeder längsgerichtete Zwischenraum (22) einer Teilanordnung von Poren (24) des Netzwerks (20) von Poren, der Teilanordnung von Poren (24), für die die Poren entlang der Längsachse (X) ausgerichtet sind, entspricht,

wobei die längsgerichteten Zwischenräume (22) somit eine Anisotropieachse der mikrostrukturierten Architektur definieren.

10. Verfahren (100) nach Anspruch 9, wobei der Träger auf eine Temperatur strikt über der Umgebungstemperatur und unter oder gleich 250 °C erwärmt wird.

11. Verfahren (100) nach einem der Ansprüche 9 oder 10, wobei der Träger (S) auf eine Temperatur zwischen 180 °C und 220 °C, vorteilhafterweise zwischen 190 °C und 210 °C erwärmt wird.

12. Verfahren (100) nach einem der Ansprüche 9 bis 11, wobei eine volumetrische Energiedichte des Laserstrahls während des Schritts (120) des lokalisierten Schmelzens durch den Laser von 30 % bis 90 % des Werts der volumetrischen Energiedichte des Laserstrahls entspricht, die notwendig ist, um ausgehend von dem Metallpulver einen nichtporösen Block zu bilden.

13. Verfahren nach einem der Ansprüche 9 bis 12, wobei der Schritt (110) des Abscheidens und der Schritt (120) des lokalisierten Schmelzens nacheinander wiederholt werden.


## Claims

1. A metallic filter (1) comprising a microstructured architecture (2) defined in a three-dimensional space having orthogonal axes (X, Y, Z), the microstructured architecture (2) comprising a metallic network (10) formed of a plurality of longitudinal connecting strands (12), namely extending along a longitudinal axis (X) direction, the metallic filter being **characterised in that**:

   - the microstructured architecture (2) comprises a network (20) of pores formed of a plurality of longitudinal interstices (22) located along connecting strands (12), each longitudinal interstice corresponding to a subset of pores (24) of said network (20) of pores, subset of pores (24) for which the pores are aligned along the longitudinal axis (X), the longitudinal interstices (22) thereby defining an axis of anisotropy of the microstructured architecture.

2. The metallic filter according to claim 1, wherein the pores (24) have the same size.

3. The metallic filter according to any one of claims 1 or 2, wherein the porosity is between 10% and 70%.

4. The metallic filter (1) according to any one of claims 1 to 3, wherein the connecting strands (12) have a width of between 10 μm and 500 μm, and the longitudinal interstices (22) have a width of between 1 μm and 100 μm.

5. The metallic filter (1) according to any one of claims 1 to 4, having a thickness (e) defined along the longitudinal axis (X) of between 250 μm and 300 mm.

6. The metallic filter (1) according to any one of claims 1 to 5, wherein the metallic network (10) is made of a metal selected from aluminium, nickel, cobalt, iron, copper, palladium, titanium, tungsten, silver or platinum, or of an alloy of materials such as stainless steel, metal alloy or metal oxide.

7. The metallic filter (1) according to any one of claims 1 to 6, further comprising two opposite main faces (3, 4) delimiting the microstructured architecture (2), said longitudinal faces (3, 4) being respectively covered with a thin virucidal or bactericidal layer.

8. A functional part (30) comprising a metallic filter (1) according to any one of claims 1 to 7 and a peripheral edge (32) of zero porosity surrounding the microstructured architecture (2) of the metallic filter.

9. A method (100) of additive manufacturing of a metallic filter (1) according to any one of claims 1 to 7, said method (100) of additive manufacturing comprising the following steps:

   (110) depositing at least one layer of metallic powder of a given material or of a given alloy of materials on a support, said layer of metallic powder having a thickness of between 1 μm and 200 μm;
   (120) performing localised laser melting of the metal grains of the powder, at a temperature higher than the melting temperature of the given material or of the given alloy of materials forming said metallic powder deposited in the step (110), the method being **characterised in that** a computer program is run so as to create a predetermined pattern (M) of a microstructured architecture (2) defined in a three-dimensional space having orthogonal axes (X, Y, Z), the microstructured architecture (2) comprising:

      - a metallic network (10) formed of a plurality of longitudinal connecting strands (12), namely extending along a longitudinal axis direction (axis X), and
      - a network (20) of pores formed of a plurality of longitudinal interstices (22) along connecting strands, each longitudinal interstice (22) corresponding to a subset of pores (24) of the network (20) of pores, subset of pores for which the pores are aligned along the longitudinal axis (X),

the longitudinal interstices (22) thereby defining an axis of anisotropy of the microstructured architecture.

10. The method (100) according to claim 9, wherein the support is heated to a temperature strictly above ambient temperature and less than or equal to 250°C.

11. The method (100) according to any one of claims 9 or 10, wherein the support (S) is heated to a temperature between 180°C and 220°C, advantageously between 190°C and 210°C.

12. The method (100) according to any one of claims 9 to 11, wherein a volume energy density of the laser beam during the step (120) of localized laser melting corresponds to 30% to 90% of the value of the volume energy density of the laser beam required to form a non-porous block from said metallic powder.

13. The method (100) according to any one of claims 9 to 12, wherein the step (110) of deposition and the step (120) of local laser melting are successively repeated several times.

# Figure 1

Figure 2

Figure 3

# Figure 4

# Figure 5

**EP 4 194 073 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2018005315 A1
- US 2017239726 A1
- US 2020306674 A1